Europäisches Patentamt

European Patent Office

Office européen des brevets

(19)

(11) EP 1 288 543 A1

(12) EUROPÄISCHE PATENTANMELDUNG

(43) Veröffentlichungstag:
05.03.2003 Patentblatt 2003/10

(51) Int Cl.⁷: F16K 1/22, F16K 27/02,
F02D 9/10, F01N 1/16

(21) Anmeldenummer: 02019144.1

(22) Anmeldetag: 30.08.2002

(84) Benannte Vertragsstaaten:
AT BE BG CH CY CZ DE DK EE ES FI FR GB GR
IE IT LI LU MC NL PT SE SK TR
Benannte Erstreckungsstaaten:
AL LT LV MK RO SI

(30) Priorität: 31.08.2001 DE 10142411

(71) Anmelder: SIEMENS AKTIENGESELLSCHAFT
80333 München (DE)

(72) Erfinder:
• Rother, Marc
50968 Köln (DE)
• Joussen, Andre
50858 Köln (DE)

(74) Vertreter: Kahlhöfer, Hermann, Dipl.-Phys.
Patentanwälte
Kahlhöfer Neumann
Herzog Fiesser
Karlstrasse 76
40210 Düsseldorf (DE)

(54) **Einstückige Ventilklappe und Rotationsventil**

(57) Ventilklappe (33) zur Regelung einer Durchflussmenge eines Fluids durch einen Strömungsquerschnitt (40) einer Strömungsleitung (2), insbesondere zur Regelung einer Durchflussmenge eines heißen Abgases in einer Abgasleitung, wobei die Ventilklappe (33) eine Welle (3) und einen Flügel (4) hat, so dass die Ventilklappe (33) in dem Strömungsquerschnitt (40) der Strömungsleitung (2) rotierbar anordenbar ist, dadurch gekennzeichnet, dass die Ventilklappe (33) einstückig ausgeführt ist. Somit ist eine Ventilklappe angegeben, welche deutlich reduzierte Fertigungskosten bei einer vereinfachten Montage zu einem Rotationsventil ermöglicht.

FIG 1

EP 1 288 543 A1

**Beschreibung**

Die Erfindung betrifft eine Ventilklappe zur Regelung einer Durchflussmenge eines Fluids durch einen Querschnitt einer Strömungsleitung, insbesondere zur Regelung einer Durchflussmenge eines heißen Abgases in einer Abgasleitung sowie ein entsprechendes Rotationsventil. Solche Ventilklappen bzw. Rotationsventile eignen sich insbesondere zur Steuerung oder Regelung von Abgasströmen in mobilen Abgasreinigungssystemen von Diesel- und oder Otto-Motoren.

Angetrieben durch immer schärfere Abgasbestimmungen wurde insbesondere für Personenkraftwagen die Entwicklung von Abgasrückführungssystemen vorangetrieben. Grundsätzlich hat ein derartiges System die Aufgabe eine bestimmte Menge des in einer Verbrennungskraftmaschine erzeugten Abgases in ein bereitgestelltes Luft-Treibstoff-Gemisch einzuleiten, um auf diese Weise eine Reduzierung der gebildeten Stickoxide zu erreichen. Beim Verbrennungsprozess werden Kohlenwasserstoffe, wie sie beispielsweise in Benzin, Diesel oder dergleichen enthalten sind, mit dem Sauerstoff der Luft in Kohlendioxid und Wasser umgewandelt. Dabei reagiert allerdings auch der in der Luft enthaltene Stickstoff mit dem Sauerstoff, wobei Stickoxide entstehen. Dabei ist es bekannt, dass bei niedrigeren Temperaturen bei der Verbrennung weniger Stickoxide entstehen. Die Folgen einer hohen Stickoxidemission sind beispielsweise eine geringere Effizienz der Verbrennungskraftmaschine und eine erhöhte Luftverschmutzung. Aufgrund der Tatsache, dass das in die Verbrennungskraftmaschine erneut eingeleitete Abgas einen geringeren Sauerstoffgehalt enthält, steigt insgesamt der Inertgasanteil im Verbrennungsraum und die Verbrennung verlangsamt sich unter Absenkung der Stickoxid-Emission. Führt man beispielsweise ca. 10 % des Abgasstromes wieder in die Verbrennungskraftmaschine zurück, lässt sich eine Stickoxidabsenkung von ca. 30 % erreichen.

Allerdings hat sich herausgestellt, dass eine Zugabe von Abgas in Abhängigkeit der thermischen und/oder thermodynamischen Bedingungen im Brennraum der Verbrennungskraftmaschine zu erfolgen hat, um einerseits einen hohen Wirkungsgrad der Verbrennung und andererseits eine geringe Stickoxidemission zu erzielen. Da die im Brennraum während der Verbrennung herrschenden Temperaturen einen wesentlichen Einflussfaktor betreffend die Stickoxid-Emission darstellen, ist es auch bekannt, das zurückgeführte Abgas vor dem Einleiten in das Luft-Treibstoff-Gemisch aktiv zu kühlen, und auf diese Weise die Temperatur im Brennraum zu senken.

Um derartige Regulierungsmöglichkeiten zu gewährleisten, sind Abgassysteme entwickelt worden, die mehrere Abgasrückführungsleitungen aurweisen. Dabei wird das zurückzuführende Abgas in Abhängigkeit des Betriebszustandes der Verbrennungskraftmaschine direkt zu dem Ansaugrohr zurückgeführt oder zunächst über einen anderen Strang des Abgassystems zu einem Kühler geführt, in dem die Temperatur des Abgases gesenkt wird, um anschließend dieses gekühlte Abgas der Verbrennungskraftmaschine zuzuführen. Die Regulierung der zurückzuführenden Abgasströme hinsichtlich der Weiterleitung in verschiedene Abgasrückführungsstränge zu vorgebbaren Zeitpunkten erfolgt mit Doppelklappen, wie sie beispielsweise aus der DE 44 26 028 bekannt sind.

Die DE 44 26 028 betrifft ein Abgasklappensystem für eine mehrsträngige Abgasanlage. In den beiden Abgassträngen ist jeweils eine Abgasklappe vorgesehen, wobei beide Abgasklappen eine gemeinsame Schwenkachse aufweisen, und die beiden Abgasklappen um 90° gegeneinander verdreht angeordnet sind. Die beiden Abgasstränge können somit wechselweise durch die Abgasklappen verschlossen bzw. freigegeben werden. Dabei ist es besonders vorteilhaft, dass das Abgas während einer Kaltstartphase der Verbrennungskraftmaschine ungekühlt zugeführt wird, da dieses in der Kaltstartphase bekannterweise eine geringere Temperatur aufweist. Nach der Kaltstartphase wird das zurückzuführende Abgas durch einen Strang mit einem Abgaskühler (Wärmetauscher) geleitet, um die oben beschriebenen positiven Effekte in Hinblick auf die Stickoxidemission zu erzielen. Die Abgaskühler sind dabei bekanntermaßen so aufgebaut, dass sie den jeweiligen Abgasstrang umschließen, wobei ein Kühlmittel, wie beispielsweise Wasser oder Luft, von diesem durchströmt wird.

Da eine solche mehrsträngige Abgasrückführungsleitung relativ viel Platz benötigt, was insbesondere in Hinblick auf die Anordnung einer solchen Abgasrückführungsleitung im Motorraum eines Personenkraftwagens Probleme verursacht, wurden neue Abgaskühler entwickelt. Diese Abgaskühler zeichnet sich dadurch aus, dass sie in ihrem Inneren zweisträngig aufgebaut sind, wobei das den Abgaskühler durchströmende Abgas in einem Strang gekühlt wird, während es in einer anderen Leitung ungekühlt hindurchgeführt wird. Solche neuen Abgaskühler weisen im Zentrum einen Innenkanal auf, der bevorzugt konzentrisch von einer ringförmigen Strömungsleitung umgeben ist. Die ringförmige Strömungsleitung steht im wärmeleitenden Kontakt mit einem äußeren Mantel, von außen mit einem Kühlmedium umspült wird. Folglich wird das Abgas beim Durchströmen der Strömungsleitung gekühlt. Wird das Abgas über den Innenkanal zurückgeführt, behält dieses seine Temperatur im wesentlichen bei, da ein direkter und wärmeleitender Kontakt zur Mantelfläche der Strömungsleitung unterbunden ist.

Zu diesen unterschiedlichen Abgasreinigungssystemen sind auch verschiedene Drosselklappensysteme bekannt, die zur Steuerung bzw. Regelung der Abgasströme durch die gewünschte Abgasleitung dienen. Die Drosselklappensysteme werden grob in Teller- bzw. Hubventile und Rotationsventile unterschieden. Bei den Hubventilen wird üblicherweise eine Bewegung in axialer Richtung der zu öffnenden bzw. der zu schließenden Abgasleitung durchgeführt, wobei der Teller den Strömungsquerschnitt freigibt oder verschließt. Im Gegensatz dazu führen Rotationsventile eine Rotation aus, wobei der Flügel zum Verschließen des Strömungsquerschnittes senkrecht zur Strömungsrichtung und dichtend positioniert wird, während er in einer geöffneten Position parallel zur Strömungsrichtung ausgerichtet wird.

Bezüglich der Fertigung und Montage einer Ventilklappe für ein Rotationsventil haben sich einige technische Probleme aufgetan, die bislang schlicht hingenommen wurden. Diese Probleme betreffen die Anordnung der Ventilklappe im Gehäuse des Rotationsventils. Üblicherweise sind solche Gehäuse mit zwei Lagerstellen versehen, die auf gegenüberliegenden Seiten der Strömungsleitung angeordnet sind. Zur Montage wurde zumeist die Welle durch eine dieser Lagerstellen hindurchgesteckt, so dass sich diese durch die Strömungsleitung erstreckt. Anschließend wurde nun der Flügel an der bereits im Gehäuse installierten Welle befestigt. Hierzu waren beispielsweise zwei Alternativen bekannt, wobei der Flügel bei einer Alternative in dieser Position mit der Welle fügetechnisch verbunden, insbesondere verschweißt, wurde, wobei der Flügel auf der Oberfläche der Welle anliegt. Die andere Alternative bestand darin, die Welle mit einem Schlitz zu versehen, durch welchen der Flügel hindurchgeschoben werden konnte, wobei dieser nach der Justierung mit vorzugsweise lösbaren Verbindungsmitteln (Schrauben etc.) an der Welle befestigt wurde. Bei dieser Variante ist eine thermische Behandlung der Ventilklappe zu vermeiden, da gerade bei der geschlitzten Welle eine Verformung der Komponenten vermieden werden muss.

Beide Alternativen erfordern ein nachträgliches Befestigen des Flügels an der Welle, wobei sich die Welle bereits im Gehäuse befindet. Dabei kommt es bei diesem Vorgang häufig zu Montagefehlern, die insbesondere ungewünschte Eigenschaften des Rotationsventils in Hinblick auf die Dichtheit im geschlossenen Zustand zur Folge haben. So hat beispielsweise die erstgenannte Alternative den Nachteil, dass zur Fixierung des Flügels an der Welle thermische Energie in die Ventilklappe eingeleitet wird, wobei das thermische Ausdehnungsverhalten der Ventilklappe bzw. des Gehäuses eine exakte Justierung des Flügels gegenüber der Strömungsleitung stark beeinträchtigt. Weiterhin kann diese thermischen Energieeinbringung zu ungewollten Verformungen der Welle führen, die beispielsweise die Lebensdauer eines solchen Rotationsventils negativ beeinflussen können, da infolge der Verformung erhöhte Kräfte in den Lagerstellen auftreten. In Hinblick auf die zweite Alternative ist ebenfalls eine exakte Justierung nur schwer möglich, da dies schon allein wegen des Spiels bei den Befestigungsmitteln (z.B. Schraube/Gewinde) unterbunden wird. Die Einbringung des Schlitzes in die Welle unterliegt zudem sehr engen Fertigungstoleranzen, um einen ausreichend guten Sitz des Flügels in der Welle zu ermöglichen. Weiterhin müssen bei der Montage eine Vielzahl unterschiedlicher Komponenten aneinandergefügt werden, die leicht verloren werden können und zudem eine verlängerte Montagedauer zur Folge haben.

Hiervon ausgehend ist es Aufgabe der vorliegenden Erfindung, eine Ventilklappe sowie ein entsprechendes Rotationsventil anzugeben, welches kostengünstig herstellbar und leicht zu montieren ist, wobei insbesondere die Justierung der Ventilklappe gegenüber dem zu verschließenden Strömungsquerschnitt erleichtert werden soll.

Diese Aufgaben werden gelöst durch eine Ventilklappe mit den Merkmalen des Anspruchs 1 sowie durch ein Rotationsventil gemäß den Merkmalen des Anspruchs 6. Weitere vorteilhafte Ausgestaltungen der Erfindung, welche einzeln oder in Kombination miteinander eingesetzt werden können, sind Gegenstand der jeweils abhängigen Ansprüche.

Die erfindungsgemäße Ventilklappe zur Regelung einer Durchflussmenge eines Fluids durch einen Strömungsquerschnitt einer Strömungsleitung, insbesondere zur Regelung einer Durchflussmenge eines heißen Abgases in einer Abgasleitung, hat eine Welle und einen Flügel hat, so dass die Ventilklappe in dem Strömungsquerschnitt der Strömungsleitung rotierbar anordenbar ist. Die Ventilklappe zeichnet sich dadurch aus, dass sie einstückig ausgeführt ist, insbesondere einstückig gesintert oder geschmiedet. Eine solche, einstückig ausgeführte Ventilklappe für ein Rotationsventil hat eine Vielzahl von Vorteilen. Vordergründig erkennbar ist die Tatsache, dass somit der Flügel und die Welle unverlierbar miteinander verbunden sind. Dies vereinfacht die Herstellung, die Montage sowie die Wartung der Ventilklappe bzw. eines entsprechenden Rotationsventils. Zudem bietet sich nun die Möglichkeit, die Ventilklappe deutlich schlanker, leichter und kostengünstiger herzustellen. Betrachtet man beispielsweise die geschlitzte Welle, so musste diese einen minimalen Wellendurchmesser aufweisen, bei dem die Ausbildung eines Schlitzes sowie die Anordnung des Flügels noch möglich war, ohne die strukturelle Integrität der Ventilklappe zu gefährden. Bezüglich der thermisch gefügten Variante ist ebenfalls ein solcher, relativ dicker Wellendurchmesser erforderlich, um eine ausreichende Wärmekapazität der Welle zu gewährleisten und auf diese Weise eine zu starke Verformung zu verhindern. Der gegenüber bekannten Ausführungen von Ventilklappen reduzierte Wellendurchmesser hat weiterhin auch ein geringeres Gewicht der Ventilklappe zur Folge, wodurch infolge der Einsparung von Material auch die Fertigungskosten verringert werden können. Somit vermeidet eine einstückige Ausführung der Ventilklappe aufwendige und thermische Verfahrensschritte bei der Montage in einem Rotationsventil.

Gemäß einer weiteren Ausgestaltung der Ventilklappe ist der Flügel gegenüber der Welle so angeordnet, dass dieser eine Achse der Welle direkt kreuzt. Die Achse stellt dabei die Rotationsachse der Welle dar, so dass hier eine zentrische und koaxiale Anordnung von Flügel und Welle beschrieben ist. Diese Anordnung hat den Vorteil, dass beim Vorbeiströmen des Fluids an der Ventilklappe im geöffneten Zustand keine scharfen Kanten oder dergleichen existieren, die eine ungleichmäßige Strömung in einem stromabwärts der Ventilklappe gelegenen Bereich der Strömungsleitung bedingen würden. Eine möglichst gleichmäßige, insbesondere laminare Strömung ist dann erforderlich, wenn die Ventilklappe beispielsweise einem Abgaskühler oder Komponenten zur chemischen Umsetzung von Schadstoffen im Abgas vorgeschaltet ist. Mit "direkt" ist in diesem Zusammenhang gemeint, dass im Gegensatz zu bekannten, um die Welle gebogene und fügetechnisch befestigten Flügeln, hier eine Durchdringung der Achse durch den Flügel gegeben ist. Allerdings kann der Flügel auch so ausgeführt sein, dass diese die Welle parallel in Strömungsrichtung des Fluids vor oder nach der Achse durchdringt.

In Hinblick auf die hohen thermischen und dynamischen Belastungen des Rotationsventils gerade in der Abgasleitung eines Otto- oder Dieselmotors in einem Automobil wird die Welle üblicherweise beidseitig gelagert. Unter Umständen (beispielsweise bei nahezu gleichbleibenden Strömungseigenschaften des Abgases oder einer Anordnung des Ventils an einer weit vom Motor entfernten, kühleren Position im Abgassystem) ist es jedoch auch möglich, den Flügel an einem freien Ende der Welle anzuordnen. Das bedeutet, das sich die Welle ausgehend von dem Flügel in axialer Richtung unterschiedlich lang erstreckt. Insbesondere ist das freie Ende so gestaltet, dass es sich nach der Montage in einer Strömungsleitung nicht in einer Lagerstelle des Gehäuses, sondern in der Strömungsleitung selbst befindet. Dieses freie Ende ist demnach kürzer als das andere, gelagerte Ende der Welle ausgeführt, insbesondere hat es eine Erstreckung in Richtung der Achse, die kleiner als 80%, bevorzugt kleiner als 50% und gegebenenfalls sogar kleiner als 30% bzw. 10% der Erstreckung in axialer Richtung des anderen, gelagerten Endes ist. Eine einseitig lagerbare Ventilklappe erleichtert die Montage zusätzlich und reduziert infolge der Materialersparnis weiter die Fertigungskosten.

Weiter wird vorgeschlagen, dass die Welle Mittel zur Positionierung der Welle und/oder des Flügels in Relation zu dem Strömungsquerschnitt der Strömungsleitung aufweist. Hierfür eignen sich beispielsweise Anschläge, Nuten, Absätze oder dergleichen. Aus der Flügel kann zusätzlich mit solchen Mitteln versehen werden, insbesondere weist dieser Fasen und/oder Stufen über seinen Umfang auf. Diese Mittel zur Positionierung sind insbesondere dann vorteilhaft, wenn die Strömungsleitung mehrsträngig aufgebaut ist, speziell wenn die Strömungsleitung noch einen koaxial angeordneten Innenkanal aufweist, der mit einem Mantelrohr begrenzt ist. Das Zusammenspiel der Mittel zur Positionierung mit einem solchen Mantelrohr wird später auch noch anhand der Figuren erläutert.

Gemäß einem weiteren Aspekt der Erfindung wird ein Rotationsventil zur Regelung einer Durchflussmenge eines Fluids durch einen Strömungsquerschnitt einer Strömungsleitung, insbesondere zur Regelung einer Durchflussmenge eines heißen Abgases in einer Abgasleitung angegeben. Das Rotationsventil weist dabei eine den Strömungsquerschnitt der Strömungsleitung begrenzendes Gehäuse, eine einstückige Ventilklappe sowie mindestens eine Lagervorrichtung für eine rotierbare Lagerung der Ventilklappe in dem Gehäuse auf. Dabei eignet sich ein solches Rotationsventil auch als Ventilkomponentensatz, der nachträglich auf sehr einfache Weise in bekannte Abgasreinigungssysteme bzw. Abgasrückführungssysteme eingesetzt werden kann. Die geringe Anzahl von Komponenten gewährleistet eine schnelle und einfache Montage, wobei thermische und/oder fügende Verfahrensschritte bezüglich der Ventilklappe in dem Gehäuse vermieden werden.

Nach einer weiteren Ausgestaltung des Rotationsventils ist das Gehäuse einstückig ausgeführt und die Ventilklappe über die Strömungsleitung in mindestens eine Lagerstelle für die mindestens eine Lagervorrichtung einsetzbar. Im Gegensatz zu einem geteilten Gehäuse, in das eine einstückige Ventilklappe bei der Montage einfach in die Lagerstelle bzw. Lagerstellen hineingelegt werden kann, erfolgt hier ein Einführen der Ventilklappe über die Strömungsleitung. Dabei ist es besonders vorteilhaft, dass die mindestens eine Lagerstelle eine sich durch das Gehäuse erstreckende Bohrung ist, diese zumindest eine größere Höhe aufweist, als die Erstreckung des gelagerten Endes der Welle. Somit kann dieses gelagerte Ende soweit eingeführt werden, dass die Ventilklappe senkrecht zur Strömungsrichtung des Fluids ausgerichtet ist. Gegebenenfalls kann nun auch das gegenüberliegende Ende der Welle in eine Lagerstelle eingeführt werden, wenn die Ventilklappe anschließend in axialer Richtung bewegt wird. Beispielhaft wird die Gestaltung eines solchen Gehäuses nachfolgend mit Bezug auf die Figuren näher erläutert.

Gemäß einer weiteren Ausgestaltung des Rotationsventils weist dieses einen Antrieb auf, der eine beliebige Rotation der Ventilklappe um die Achse der Welle ermöglicht. Hierzu bieten sich beispielsweise elektrische oder mechanische Antriebe an. Üblicherweise erfolgt eine Rotation der Ventilklappe nur um 90°, wobei beispielsweise die Position bei 0° die geschlossene Position und 90° die vollkommen geöffnete Position gegenüber der Strömungsleitung darstellt. Diese Endpositionen werden bekanntermaßen durch Anschläge des Gehäuses und/oder der Strömungsleitung gebildet, sie können jedoch auch über eine geeignete Software oder dergleichen bei der Ansteuerung des Antriebes realisiert sein.

Weiterhin wird vorgeschlagen, dass das Rotationsventil in der mindestens einen Lagerstelle eine Dichtung aufweist. Die Dichtung, welche vorzugsweise aus Graphit hergestellt ist, hat die Funktion, die Strömungsleitung gegenüber der Umgebung außerhalb des Gehäuses abzudichten. Graphit hat sich gerade bei Abgasreinigungsanlagen überraschenderweise als Dichtmittel herausgestellt, obwohl bislang davon ausgegangen wurde, dass Graphit nur eine thermische Stabilität bis ca. 450 °C aufweist. Ein Einsatz als Dichtmittel im Abgassystem wurde bislang nicht in Betracht gezogen, da sich wegen des das Gehäuse durchströmenden Abgases thermische Beanspruchungen bis ca. 700 °C ergeben. Ein Grund dafür, dass eine Dichtung, die zumindest teilweise aus Graphit (insbesondere Graphitfolie) besteht, bei derartig hohen Temperaturen ihre Funktionalität beibehält, ist in dem hohen Inertgas-Anteil des vorbeiströmenden Abgases zu sehen. Gelangt das heiße Abgas zur Dichtstelle oder zur Lagerung so hat der Kontakt mit dem Graphit eine erhöhte thermische Stabilität des Graphits zur Folge. Ist die Dichtung beispielsweise mit einer Graphitfolie gebildet, welche zu einem Ring geformt ist und über die Achse gestülpt wird. Dabei wird dieser Ring mit Graphitfolie vorzugsweise mittels der Lagervorrichtung gegen einen Anschlag des Gehäuses gedrückt, so dass es zu einer Verformung der Graphitfolie bzw. des Ringes kommt. Diese Verformung wirkt nun wie eine Art Labyrinthdichtung, so dass ein Ausströmen des Abgases aus dem Gehäuse in die Umgebung dauerhaft verhindert wird. Die Graphit-Dichtung steht nun von einer Seite mit dem nahezu sauerstofflosen Abgas in Kontakt, während auf der anderen Seite durch die Hülse und dem erhöhtem Druck in der Abgasanlage ein schädliches Eindringen von Luft vermieden wird.

Mit Bezug auf die Verwendung einer erfindungsgemäßen Ventilklappe bzw. des entsprechenden Rotationsventil mit einem in Strömungsrichtung des Abgases nachgeschalteten koaxialen Abgaskühler mit einem zentrisch angeordneten Innenkanal, werden nun einige Details einer solchen Vorrichtung erläutert. Dabei ist festzuhalten, das es sich hierbei um eine beispielhafte Beschreibung einer Vorrichtung zur Abgasrückführung handelt, die Erfindung jedoch nicht auf dieses Beispiels oder noch auf diese Anwendung beschränkt ist. Dabei ist das Rotationsventil als Ventilkomponentensatz ausgeführt und umfasst eine einstückige Ventilklappe mit Welle und Flügel (aus einem Material), eine Lagervorrichtung und ein Gehäuse, wobei die Welle Mittel zur Positionierung des Flügels gegenüber dem Innenkanal aufweist.

Der Flügel hat eine Fläche, die kleiner als der freie Strömungsquerschnitt der Strömungsleitung ist und im Wesentlichen einem Querschnitt des Innenkanals entspricht, so dass mittels des Flügels der Innenkanal geöffnet oder geschlossen werden kann, wobei die Durchflussmenge des Abgases durch den Innenkanal variiert werden kann. Ein solcher Ventilkomponentensatz kann nachträglich exakt zu dem Abgaskühler mit interner Bypass-Strömung ausgerichtet werden, wobei zusätzlich Montagefehler vermieden werden. Außerdem ist gewährleistet, dass geringe Abweichungen hinsichtlich der Positionierung der Ventilklappe zum Innenkanal, wie sie beispielsweise infolge von Fertigungstoleranzen auftreten, ausgeglichen werden können.

In Hinblick auf eine gleichmäßige Verteilung des durchströmenden Fluids ist es vorteilhaft, dass der Innenkanal zur Strömungsleitung im wesentlichen konzentrisch angeordnet ist. Auf diese Weise ist bei einer zentralen Anströmung gewährleistet, dass der Innenkanal keinen Strömungswiderstand darstellt und turbulente Strömungen vermieden werden.

Die Welle weist hie beispielsweise als Mittel zur Positionierung mindestens eine Nut auf. Diese ist bevorzugt so ausgeführt, dass die mindestens eine Nut zur Aufnahme eines den Innenkanal umgebenden Mantelrohres geeignet ist. Das Mantelrohr weist dazu mindestens eine Aussparung (insbesondere ein Langloch) auf, welche in die mindestens eine Nut der Welle eingreifen kann. Die mindestens eine Nut dient zur Positionierung gegenüber dem Mantelrohr, wobei dieses zumindest teilweise in die Nut eingreift. Auf diese Weise wird eine exakte Ausrichtung des Flügels gegenüber dem den Innenkanal begrenzenden Mantelrohr sichergestellt, so dass insbesondere Montagetoleranzen oder Fertigungstoleranzen ausgeglichen werden, wie sie beispielsweise in Hinblick auf die konzentrische Anordnung des Mantelrohres gegenüber der Strömungsleitung oder aber der Welle bezüglich der Lagerung im Gehäuse auftreten.

Die Aussparung, die bevorzugt als Langloch ausgeführt ist, dient dabei zumindest abschnittsweise als Anlagefläche für die Welle. Diese anliegenden Abschnitte sollten jedoch kleiner als 50 %, insbesondere kleiner als 30 %, vorzugsweise kleiner als 10 % des Umfangs der Welle ausmachen, um gegebenenfalls unterschiedliches thermisches Ausdehnungsverhalten der Welle gegenüber dem Mantelrohr zu gewährleisten. Auch kann es unter Umständen vorteilhaft sein, dass eine gewisse Bewegungsfreiheit der Welle in der Aussparung ermöglicht wird, so dass Verunreinigungen wie Rußpartikel, Asche oder dergleichen, die sich während des Betriebes einer solchen Abgasrückführungseinrichtung in der Aussparung festsetzen können, aufgrund dieser Relativbewegung wieder gelöst werden. Dadurch wird insbesondere eine Beeinträchtigung der Rotationsfreiheit der Welle durch Verklebung verhindert.

Hinsichtlich der Ausgestaltung der Aussparung als Langloch sei noch darauf hingewiesen, dass die offene Seite des Langloches bevorzugt in entgegengesetzte Richtung zur Strömungsrichtung angeordnet ist, so dass die Welle stets mit dem durchströmenden Abgas in die Aussparung hineingedrückt wird. Ungeachtet dessen besteht jedoch die Möglichkeit, derartige Ventilkomponentensätze auf der Eintrittsseite oder auf der Austrittsseite des Innenkanals anzuordnen. Wird der Ventilkomponentensatz mit einem Abgaskühler verbunden, wie er oben beschrieben ist, so hat die Anordnung auf der Abgaseintrittsseite den Vorteil, dass an dieser Stelle das rückzuführende Abgas noch eine sehr hohe Temperatur aufweist, so dass Verschmutzungen oder beispielsweise Kondensation nahezu vermieden werden können. Allerdings führt die hohe Temperatur des rückzuführenden Abgases zu einer hohen thermischen Beanspruchung des Ventilkomponentensatzes, so dass es unter Umständen auch vorteilhaft sein kann, diesen auf der Fluidaustrittsseite anzuordnen. In diesem Fall sind eventuell besonders geformte Aussparungen zu verwenden, die ein Herausdrücken der Welle verhindern, oder es können zusätzliche Sicherungsmaßnahmen getroffen werden.

Das Gehäuse weist vorteilhafterweise einen Flansch auf, wobei die Lagervorrichtung der Welle über eine Wärmebrücke mit dem Flansch verbunden ist. Der Flansch dient insbesondere zur Montage des Gehäuses an einen Abgaskühler, wobei dieser naturgemäß eine deutlich reduzierte Temperatur gegenüber dem Abgasstromes aufweist, der das Gehäuse durchströmt. Durch die Bildung einer Wärmebrücke zwischen der Lagervorrichtung und dem Flansch ist ein schneller Abtransport der in die Lagervorrichtung eingebrachte Wärme (beispielsweise über die Welle oder das Abgas direkt) sichergestellt. Dies führt zu einer deutlich erhöhten Lebensdauer in Hinblick auf die Funktionalität des Lagers. Die Lebensdauer kann zusätzlich durch die Verwendung einer Graphitschmierung oder aber eines Graphit enthaltenden Lagersitzes gesteigert werden.

Der Durchmesser der Strömungsleitung ist in Strömungsrichtung eines durchströmenden Fluid kleiner oder gleich einem angrenzenden Öffnungsdurchmesser eines angrenzenden Bauteils. Auf diese Weise werden sogenannte Abrisskanten am Umfang der Strömungsleitung vermieden, welche zu einer turbulenten Strömung des Fluids führen würden. Eine solche turbulente Strömung hätte zur Folge, dass eine exakte Steuerung bzw. Regulierung des Fluidstromes nicht mehr gewährleistet wäre. Dabei gelten die gerade beschriebenen Beziehungen bei einer Anordnung des Ventilkomponentensatzes stromaufwärts des angrenzenden Abgaskühlers. Ist der Ventilkomponentensatz stromabwärts des Abgaskühlers angeordnet, so ist der Außendurchmesser der Strömungsleitung in Strömungsrichtung des durchströmenden Fluids größer oder gleich dem angrenzenden Öffnungsdurchmesser des angrenzenden Bauteils ausgeführt. Auf diese Weise wird vermieden, dass Teile des stromabwärts angeordneten Bauteils in den freien Strömungsquerschnitt der Strömungsleitung hineinragen und zur Verwirbelung des Fluids führen.

Betrachtet man die Anordnung der Klappe quer zur Strömungsrichtung, so wird zwischen dem Flügel und dem Mantelrohr des Innenkanals ein Ringspalt gebildet, der seinen Ursprung insbesondere in der nachträglichen Positionierung des Flügels in dem Mantelrohr hat. Dies hat nämlich zur Folge, dass der Flügel gegenüber dem Mantelrohr mit ausreichend großen Montagetoleranzen versehen werden muss, so dass eine exakte Positionierung des Flügels gegenüber dem Mantelrohr innerhalb vorgebbarer Grenzen gewährleistet ist. Der Ringspalt ist dabei vorteilhafterweise so ausgebildet, dass nur eine Bypass-Strömung von weniger als 5 %, insbesondere weniger 3 %, bevorzugt sogar kleiner 1% des in das Gehäuse einströmenden Fluides erlaubt wird, das folglich größtenteils durch die Strömungsleitung hindurchströmt.

Bei einer Anordnung des Flügels quer zur Strömungsrichtung wird das Ziel verfolgt, eine Durchströmung des Fluids durch den Innenkanal zu verhindern. Der Ringspalt hat jedoch zur Folge, dass dennoch eine Bypass-Strömung durch den Innenkanal hindurchströmt. Werden jedoch maximale Bypass-Strömungen von 5 % gewährleistet, so lassen sich in Hinblick auf die Durchströmung eines Abgaskühlers immer noch sehr exakt vorgebbare Temperaturbereiche des gekühlten Abgasstromes erzielen, ohne die Effektivität des Abgaskühlers spürbar zu beeinträchtigen. Zur Erzielung einer solch begrenzten Bypass-Strömung ist es vorteilhaft, dass der Ringspalt eine Breite hat, die kleiner als 0,5 mm ist, bevorzugt kleiner als 0,3 mm und insbesondere kleiner als 0,15 mm. Dabei ist insbesondere die breiteste Stelle des Ringspalts gemeint, falls eine exakte zentrische Anordnung des Flügels zu dem Mantelrohr nicht erreicht werden kann.

Bei einer besonderen Ausgestaltung des Rotationsventils hat der Flügel eine Fläche, die gegenüber dem Querschnitt des Innenkanals verschieden ist. Hierbei ist sowohl der Flächeninhalt, also die Größe der Fläche, sowie auch die Form oder äußere Gestalt der Fläche gemeint. So ist es beispielsweise vorteilhaft, bei einem kreisrunden Querschnitt des Innenkanals den Flügel mit einer ovalen Fläche auszuführen, wobei der Flügel in der verschließenden Stellung nicht senkrecht zur Strömungsrichtung ausgerichtet ist, sondern mit dieser einen anderen Winkel bildet. Dies hat zur Folge, dass unter Umständen ein sehr kleiner Ringspalt gebildet ist, der bevorzugt nicht umläuft, sondern durch mehrere Bereiche unterbrochen wird, indem der Flügel an dem Mantelrohr anliegt. Das hat weiterhin den Vorteil, dass der verbleibende Ringspalt nicht direkt angeströmt werden kann, und somit eine unerwünschte Bypass-Strömung nahezu vermieden wird.

Zur Verbesserung der Strömungseigenschaften im Inneren des Gehäuses weist dieses einen Zugang auf, der so gestaltet ist, dass mindestens 75 %, insbesondere mindestens 85 %, bevorzugt mehr als 95 % eines in das Gehäuse einströmenden Fluids in den Innenkanal strömt, wenn der Flügel in Strömungsrichtung angeordnet ist. Eine solche Ausgestaltung des Zugangs ist insbesondere dann vorteilhaft, wenn das Gehäuse stromaufwärts eines Abgaskühlers angeordnet ist. Somit ist gewährleistet, dass das Fluid nahezu ausschließlich durch den Innenkanal strömt, wenn der Flügel in der geöffneten Stellung ist. Die Ventilklappe ist dabei so in Strömungsrichtung angeordnet, dass sie einen möglichst kleinen Strömungswiderstand darstellt, und insbesondere auch beim Vorbeiströmen des Fluids eine möglichst laminare Strömung aufrecht erhalten wird.

Auch bei dieser Verwendung bietet sich eine Ausgestaltung der einstückigen Ventilklappe an, bei der die Welle nur über eine Lagervorrichtung mit dem Gehäuse verbunden. Das bedeutet, dass sich die Welle nicht über den gesamten Strömungsquerschnitt bzw. Außendurchmesser der Strömungsleitung erstreckt. Die Halterung bzw. Befestigung der Welle erfolgt nur noch an einem Punkt im Gehäuse, während das andere Ende der Welle frei ist. Die Welle erstreckt sich dabei bevorzugt über den Querschnitt des Innenkanals, so dass diese auch zwei Nuten hat, die zur Ausrichtung gegenüber dem Innenkanal dienen. Eine solche Ausführung der Ventilklappe hat die Vorteile, dass die Herstellung aufgrund des Weglassens der zweiten Lagerung preiswerter wird, außerdem wird der durch die Welle erzeugte Strömungswiderstand reduziert.

Die Erfindung wird nachfolgend anhand der Zeichnungen und insbesondere in Verbindung mit einem Abgaskühler mit interner Bypass-Strömung näher erläutert, wobei diese lediglich vorteilhafte und besonders bevorzugte Ausführungsformen darstellen. Die Erfindung ist nicht auf die dargestellten Ausführungsbeispiele beschränkt. Es zeigen schematisch:

Fig. 1    eine Ausführungsform des Rotationsventils mit einer einstückigen Ventilklappe in den Lagerstellen eines Gehäuses,

Fig. 2    eine Ausführungsform des Rotationsventils mit einer einstückigen Ventilklappe beim Einsetzen in ein Gehäuse,

Fig. 3    perspektivisch eine erste Ausführungsform des Ventilkomponentensatzes im montierten Zustand,

Fig. 4    eine weitere Ansicht der Ausführungsform aus Fig. 3,

Fig. 5    schematisch und perspektivisch eine Detailansicht einer Ausführungsform des Ventilkomponentensatzes,

Fig. 6    eine Detailansicht einer Ausführungsform des Ventilkomponentensatzes in der geschlossenen Position;

Fig. 7    die Ausführungsform aus Fig. 6 in einer geöffneten Position;

Fig. 8    eine Schnittansicht einer weiteren Ausführungsform des Ventilkomponentensatzes und

Fig. 9    eine Schnittansicht einer weiteren Ausführungsform eines Ventilkomponentensatzes mit verkürzter Welle.

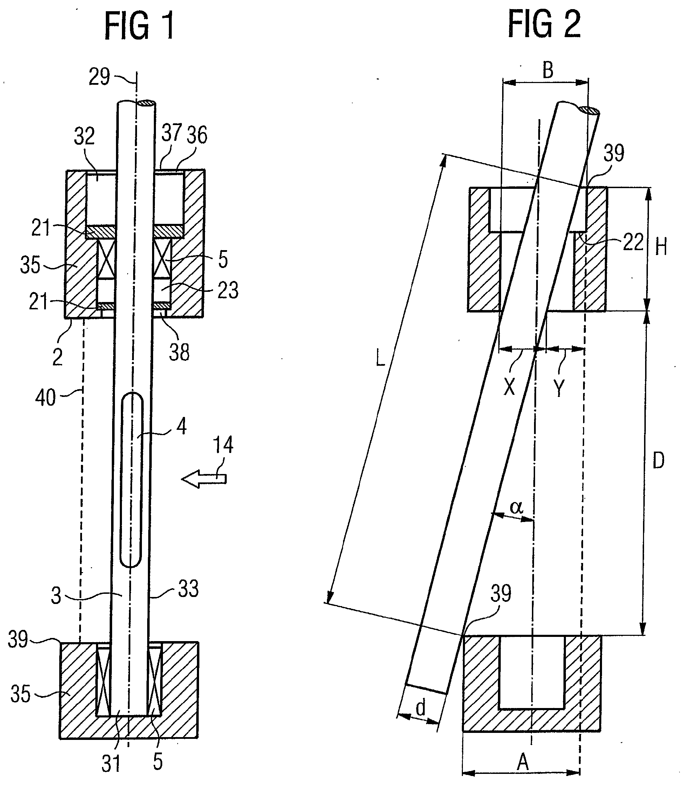

Fig. 1 zeigt schematisch und in einer Teilansicht eine einstückige Ventilklappe 33 mit einer Welle 3 und einem Flügel 4. Die Ventilklappe 33 ist dabei in zwei bezüglich der Strömungsleitung 2 gegenüber angeordneten Lagerstellen 35 mittels Lagervorrichtungen 5 gelagert. Die oben dargestellte Lagerstelle 35 weist eine Bohrung 36 auf, durch die sich die Welle 3 hindurch erstreckt, wobei diese dort mit einem nicht dargestellten Antrieb 7 verbunden ist, der eine Rotation des Flügels 4 in der Strömungsleitung 2 ermöglicht. Somit kann der Flügel 4 senkrecht und parallel zur Strömungsrichtung 14 de Fluids positioniert werden. In dieser Lagerstelle 35 sind zusätzlich Sprengringe 21 oder dergleichen angeordnet, die eine gewisse Verspannung der Lagervorrichtung 5 sowie gegebenenfalls auch einer Dichtung 23 gestatten. Diese oben dargestellte Lagerstelle 35 ist weiterhin mit einer Buchse 32 versehen, die zur besseren Abdichtung gegenüber der Umgebung sowie zur Fixierung des oberen Sprengringes 21 in die Bohrung 36 eingepresst ist.

Die Montage der Ventilklappe 33 erfolgt dabei so, dass die Ventilklappe 33 schräg in den Strömungskanal eingeführt und das antriebsseitige Ende der Welle 3 durch die Bohrung 36 gesteckt wird. Je weiter das antriebsseitige Ende der Welle 3 in die Bohrung 36 hineingeschoben wird, desto mehr gelingt es, die Ventilklappe 33 senkrecht zur Strömungsrichtung bzw. parallel zum Strömungsquerschnitt 40 (gestrichelt angedeutet) der Strömungsleitung 2 bzw. senkrecht zur Strömungsleitung 2 auszurichten. Wenn die Ventilklappe senkrecht zur Strömungsleitung 2 ausgerichtet ist, wird das dem antriebsseitigen Ende gegenüberliegende Ende 31 der Welle 3 durch eine Bewegung der Ventilklappe 33 in Richtung der Achse 29 in die zweite, unten dargestellte Lagerstelle 35 eingeführt. Nun werden noch die Lagervorrichtung 5, die Sprengringe 21, die Dichtung 23 und die Buchse 32 in die oben dargestellte Lagerstelle 35 integriert. Aufgrund der Tatsache, dass die Ventilklappe 33 einstückig ausgebildet ist, ist eine thermische Bearbeitung bzw. eine weitere besonders schwierige Montage im Inneren des nicht dargestellten Gehäuses 6 überflüssig. Bei dem dargestellten Beispiel sind die Abmessungen des Gehäuses 6 vorteilhafterweise so zu wählen, dass die Bohrung 36 eine möglichst kleine Innere Bohrungsöffnung 38 und eine kleine Äußere Bohrungsöffnung 37 hat, damit die Komponente in den Lagerstellen 35 ebenfalls möglichst klein ausgeführt werden können. Damit können wiederum die Fertigungskosten sehr niedrig gehalten werden. Die Bohrungsöffnungen 37 und 38 sind aber nicht frei wählbar, insbesondere nicht beliebig klein ausführbar. Die Größe der Bohrungsöffnungen 37 und 38 hängt im Wesentlichen von dem Strömungsquerschnitt 40, der Kante 39 und der Dicke der Welle 3 ab. Die entsprechenden relevanten Kenngrößen werden anhand der Fig. 2 erläutert.

Fig. 2 zeigt schematisch eine Welle beim Einsetzen in zwei Lagerstellen über die Strömungsleitung. Die Welle entspricht bei dieser Darstellung der geometrischen Verhältnisse einer Ausführungsform der erfindungsgemäßen einstückigen Ventilklappe. Wie bereits erwähnt, ist die Bohrung 36 nicht beliebig klein ausführbar. Aus diesem Grund sollen nun einige Beziehungen und Beispiele angegeben werden, welche die relevanten Zusammenhänge veranschaulichen. Die dargestellten Kenngrößen lauten:

A:   Abstand
B:   Bohrungsdurchmesser
D:   Strömungsleitungsdurchmesser
H:   Bohrungshöhe
L:   Länge
d:   Wellendurchmesser
x:   Erste Teilsstrecke
y:   Zweite Teilstrecke
$\alpha$:   Winkel

Zur Bestimmung des minimalen Bohrungsdurchmesser B sind der Abstand A der beiden Kanten 39 sowie der Wellendurchmesser d maßgeblich. Über die Kanten 39 wird der Winkel $\alpha$ bestimmt, der den kleinsten bzw. flachsten Winkel darstellt. An der Inneren Bohrungsöffnung 38 setzt sich der Bohrungsdurchmesser B aus der Erste Teilsstrecke x und Zweite Teilstrecke y zusammen:

$$B = x + y.$$

Die Erste Teilsstrecke x ist dabei von dem Wellendurchmesser d und dem Winkel $\alpha$ abhängig, wobei sich folgender Sachverhalt ergibt:

$$x = \frac{d}{\cos(\alpha)}.$$

Die Zweite Teilstrecke y kann ebenso in Abhängigkeit des Winkels $\alpha$ und der Höhe H der Bohrung bestimmt werden, wobei sich die Zweite Teilstrecke y besonders einfach über einen Strahlensatz bestimmen lässt:

$$\frac{H}{y} = \frac{H + D}{A} \Rightarrow y = \frac{H \cdot A}{H + D}.$$

Somit ergibt sich zunächst folgende Berechnungsvorschrift:

$$B = \frac{d}{\cos(\alpha)} + \frac{H \cdot A}{H + D}.$$

Der Betrag des Winkels $\alpha$ ist aber wie erwähnt stets von der Ausgestaltung der Strömungsleitung 2, den Lagerstellen 35 und der Ventilklappe 33 abhängig, so dass sich der Winkel $\alpha$ auch anhand deren Abmaße beschreiben lässt:

$$\cos(\alpha) = \frac{D + H}{L},$$

wobei $L = \sqrt{((D + H)^2 + A^2)}$.

Anhand der dargestellten Gleichungen lässt sich der Bohrungsdurchmesser B in Abhängigkeit des Abstandes A, des Strömungsdurchmessers D, der Höhe H der Bohrung und des Wellendurchmessers d bestimmen. Dabei kann die Bohrung 36 wie dargestellt auch mehrere Absätze bzw. Anschläge 22 aufweisen, wobei die weiter außen liegenden Absätze sich stets dem Winkel $\alpha$, der sich aus dem innenliegenden Bohrungsabschnitt ergibt, anpassen müssen.

In einem (nicht dargestellten) Beispiel weist die obere Lagerstelle 35 zwei Anschläge 22 und eine Kante 39 an der Äußeren Bohrungsöffnung 37 auf. Bei einem Wellendurchmesser d = 6 mm, einem Abstand A der beiden Kanten 39 = 19 mm, einem Strömungsdurchmessers D = 52 mm sowie den Höhen $H_1$ = 16,4 mm (Innere Bohrungsöffnung 38 bis erster Anschlag 22), $H_2$ = 20,7 mm (Innere Bohrungsöffnung 38 bis zweiter Anschlag 22) und H3 = 29,4 mm (Innere Bohrungsöffnung 38 bis Äußeren Bohrungsöffnung 37), ergeben sich folgende Bohrungsdurchmesser: $B_1$ = 10 mm, $B_2$ = 12 mm, $B_3$ = 16 mm.

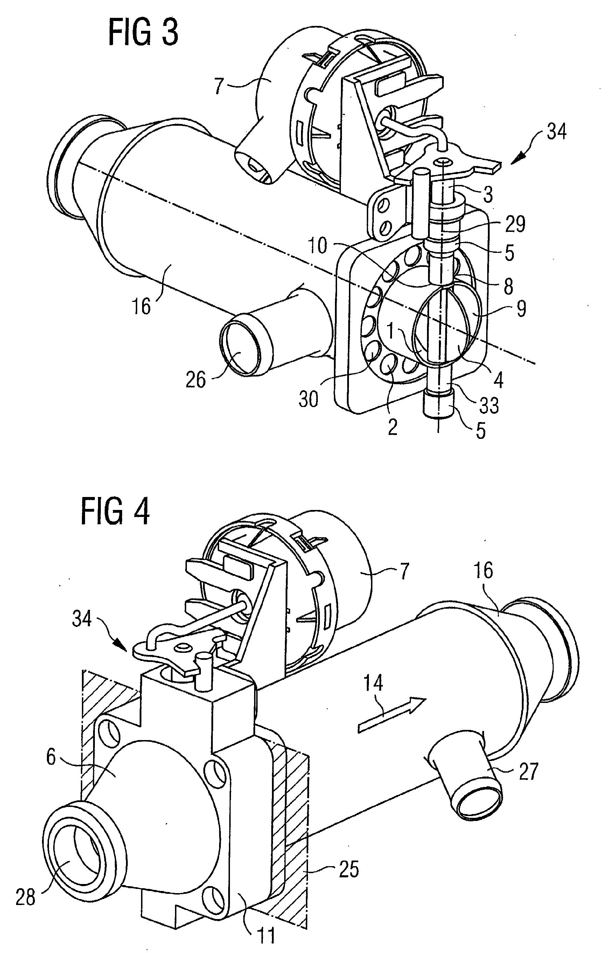

Fig. 3 zeigt schematisch und perspektivisch eine erste Ausführungsform des erfindungsgemäßen Rotationsventil 34 zum Verschließen eines Innenkanals 1, der in einer Strömungsleitung 2 angeordnet ist. In der dargestellten Ausführungsform wird die Strömungsleitung 2 in eine Mehrzahl von Teilströmungen unterteilt. Das Rotationsventil 34 umfasst eine einstückige Ventilklappe 33 mit einer Welle 3 und einem Flügel 4, eine Lagervorrichtung 5 und ein Gehäuse 6 (nicht dargestellt), wobei die Welle 3 Mittel zur Positionierung des Flügels 4 gegenüber dem Innenkanal 1 aufweist. Der Innenkanal 1 ist in der dargestellten Ausführungsform im wesentlichen konzentrisch zur Strömungsleitung 2 angeordnet.

Als Mittel zur Positionierung weist die Welle 3 zwei Nuten 8 auf, die zur Aufnahme eines den Innenkanal 1 umgebenden Mantelrohres 9 geeignet sind. Das Mantelrohr 9 weist hierbei zwei Aussparungen 10 auf, die als Langlöcher ausgeführt sind, wobei die Aussparungen 10 jeweils in eine Nut 8 der Welle 3 eingreifen. Auf diese Weise ist sichergestellt, dass der Flügel 4 zentrisch zum Innenkanal 1 bzw. dem Mantelrohr 9 ausgerichtet ist. Die Nuten 8 dienen somit auch zur Justierung des Flügels 4 in Richtung einer Achse 29, indem die Nuten 8 in die Aussparungen 10 eingreifen. Die Ausführung der Aussparungen 10 als Langlöcher hat zudem den Vorteil, dass ein unterschiedliches thermisches Ausdehnungsverhalten des Mantelrohres 9 und der Ventilklappe 33 in dieser Verbindungsstelle zumindest teilweise kompensiert werden kann. Somit können insbesondere thermische Spannungen in dieser Verbindungsstelle zumindest in Richtung der Längsachse der Langlöcher bzw. in Strömungsrichtung 14 des Fluids reduziert oder sogar vermieden werden. Dies gewährleistet die Funktionstüchtigkeit des Rotationsventils 34 auch bei eines thermischen Wechselbeanspruchung, wie sie beispielsweise in der Abgasrückführungsleitung eines Automobils auftritt.

Das Rotationsventil 34 ist mit einem stromabwärts angeordneten Bauteil 16 (Abgaskühler) verbunden. Das als Abgaskühler ausgeführte Bauteil 16 ist von einem Kühlmittel durchströmbar, wobei in der Darstellung eine Kühlmittelzufuhr 26 zu erkennen ist, die nahe dem Ventilkomponentensatz angeordnet ist. Die Zufuhr des Kühlmittels nahe der Einströmseite gewährleistet einen großen Temperaturunterschied des Kühlmediums (Wasser, Luft oder dergleichen) gegenüber dem noch sehr heißen Abgas, so dass eine rasche Abkühlung sichergestellt ist.

Der Flügel 4 ist über die Welle 3 mit einem Antrieb 7 so verbunden, dass jede beliebige Position des Flügels 4 in bezug auf die Strömungsrichtung 14 (nicht dargestellt) des durchströmenden Fluids ermöglicht wird. Vorliegend ist der Flügel 4 in der geöffneten Position dargestellt (parallel zur Strömungsrichtung 14), so dass das einströmende Fluid im wesentlichen durch den Innenkanal 1 strömt. Diese geöffnete Position des Flügels 4 wird bevorzugt in der Kaltstartphase eines Verbrennungsmotors eingenommen, so dass das Abgas den Abgaskühler ungekühlt durch den Innenkanal 1 durchströmt und der Verbrennungskraftmaschine im heißen Zustand zugeführt wird. Wird der Flügel 4 in eine geschlossene Position bewegt, so dass sie im wesentlichen senkrecht zur Strömungsrichtung 14 (nicht dargestellt) angeordnet ist und den Innenkanal 1 verschließt, strömt das Fluid nahezu vollständig durch die Strömungsleitung 2. Dabei steht das Fluid in intensivem Kontakt mit einem Mantel 30 des Abgaskühlers, wodurch eine effektive Kühlung des Abgases auf einen vorgebbaren Temperaturbereich gewährleistet ist.

Fig. 4 zeigt schematisch und perspektivisch eine Seitenansicht eines Bauteiles 16 (Abgaskühler), das in Strömungsrichtung 14 gesehen, dem Rotationsventil 34 nachgeschaltet ist. Das Rotationsventil 34 ist in einer Montageebene 25 mit dem Bauteil 16 über einen Flansch 11 des Gehäuses 6 bevorzugt lösbar (mit bekannten Verbindungsmitteln) verbunden. An dem Gehäuse 6 ist ein Antrieb 7 befestigt, der eine Rotation der Ventilklappe 33 (nicht dargestellt) bewirkt. In dem gezeigten Ausführungsbeispiel ist das Rotationsventil 34 so angeordnet, dass das Fluid über einen Zugang 28 in das Gehäuse 6 eingeleitet wird, wobei die Art der Durchströmung des Bauteils 16 von der Position des Flügels 4 abhängt. Der Zugang 28 des Gehäuse 6 ist so gestaltet, dass mindestens 95 % eines in das Gehäuse 6 einströmenden Fluides in den Innenkanal 1 (nicht dargestellt) strömt, wenn der Flügel 4 (nicht dargestellt) in Strömungsrichtung 14 angeordnet ist (geöffnete Position) und somit den Innenkanal 1 (nicht dargestellt) freigibt. Das an das Rotationsventil 34 angrenzende Bauteil 16 ist als Wärmetauscher, insbesondere Abgaskühler, ausgeführt, wobei das Bauteil 16 in einem stromabwärts gelegenen Abschnitt einen Kühlmittelauslaß 27 aufweist.

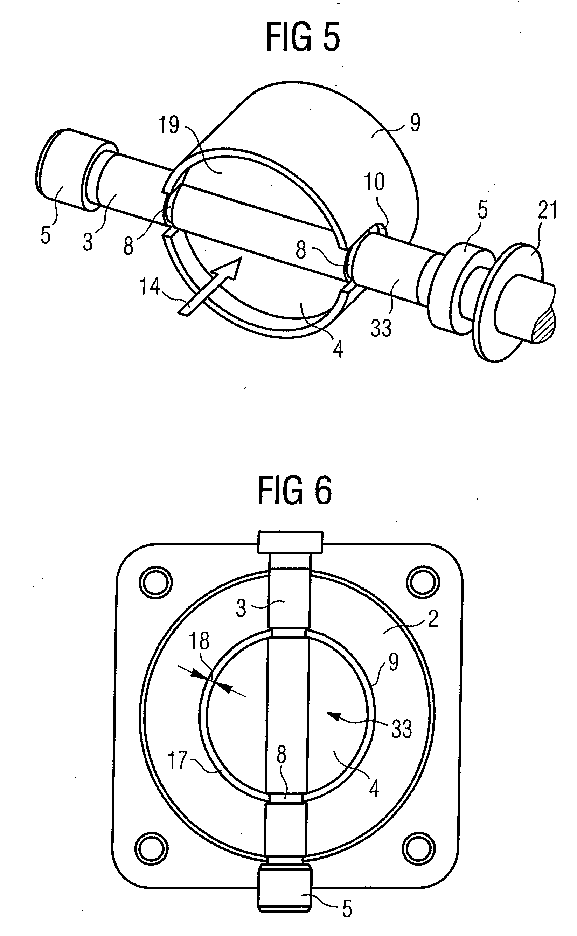

Fig. 5 zeigt schematisch und perspektivisch eine Detailansicht, welche die Positionierung der einstückigen Ventilklappe 33 mit Welle 3 und Flügel 4 gegenüber dem Mantelrohr 9 verdeutlicht. Die Nuten 8 greifen dabei in die als Langlöcher ausgeführten Aussparungen 10 des Mantelrohres 9. Dabei ist zu erkennen, dass die Welle 3 nur in bestimmten Teilbereichen an dem Mantelrohr 9 anliegt und insbesondere in Strömungsrichtung 14 ein Spalt zwischen der Welle 3 und dem Mantelrohr 9 gebildet ist. Dieser ist vorzugsweise so zu wählen, dass eine Verschmutzung bzw. Verklebung verhindert wird, die die Rotation der Ventilklappe 33 behindern würde. Die Welle 3 ist über zwei Lagervorrichtungen 5 in einem Gehäuse 6 (nicht dargestellt) gelagert. Zur Positionierung der Welle gegenüber dem Mantelrohr 9 und dem Gehäuse 6 (nicht dargestellt) weist ein solcher Ventilkomponentensatz zusätzlich einen Sprengring 21 auf, der in bekannter Weise an einem Anschlag 22 (nicht dargestellt) des Gehäuses 6 (nicht dargestellt) fixiert wird. Der Flügel 4 kann nun beliebig rotieren, insbesondere in einem Winkel von 0° bis 90°, wobei diese Grenzwerte jeweils einen vollständig geöffneten und einen komplett verschlossenen Zustand darstellen. Dieser bevorzugte Rotationsbereich wird üblicherweise mittels installierter Endschalter begrenzt (mechanischer und/oder software-technischer Natur). Durch die Ausrichtung der Fläche 19 des Flügels 4 gegenüber der Strömungsrichtung 14 wird die Menge des den Innenkanal 1 sowie die Strömungsleitung 2 (nicht dargestellt) durchströmenden Fluids geregelt.

Fig. 6 zeigt eine Detailansicht einer Ausführungsform des als Ventilkomponentensatz ausgeführten Rotationsventils, wobei der Flügel 4 in der geschlossenen Position dargestellt ist. Zwischen dem Flügel 4 und dem Mantelrohr 9 wird ein Ringspalt 17 gebildet, der nur eine Bypass-Strömung durch den Innenkanal 1 (nicht dargestellt) von weniger als 3 % erlaubt. Der überwiegende Teil des durchströmenden Fluids strömt in dieser geschlossenen Position durch die Strömungsleitung 2. Dabei weist der Ringspalt 17 eine Breite 18 auf, die bevorzugt kleiner als 0,3 mm ist.

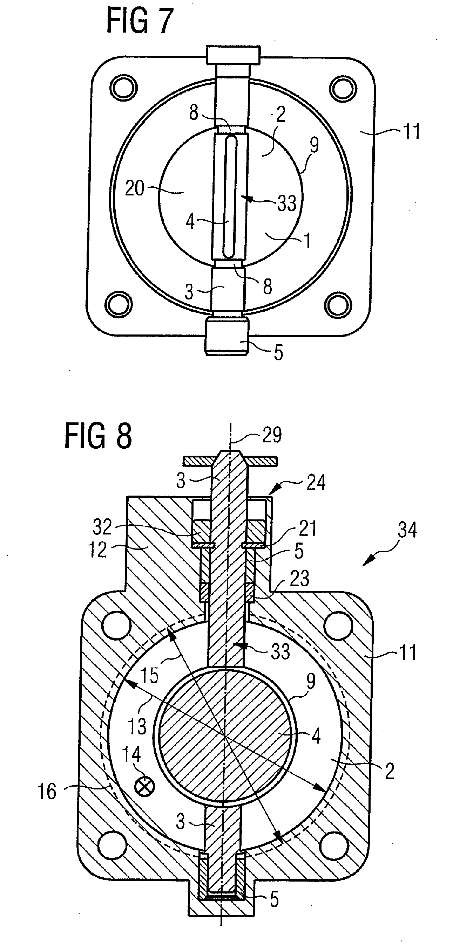

Fig. 7 zeigt eine Detailansicht einer weiteren Ausführungsform der Ventilklappe 33. Die Welle 3 ist nun so gedreht, dass der Flügel 4 einen größtmöglichen Querschnitt 20 des Innenkanals 1 freigibt, und nahezu der gesamte Fluidstrom durch den Innenkanal 1 hindurchströmt. In dieser Darstellung sind auch die zwei Nuten 8 deutlich zu erkennen, die zur Positionierung des Flügels 4 gegenüber dem Innenkanal 1 bzw. dem Mantelrohr 9 dienen.

Fig. 8 zeigt schematisch und in einer Schnittansicht eine weitere Ausführungsform eines Rotationsventils 34. Die einstückige Ventilklappe 33 bzw. die Welle 3 ist über die Lagervorrichtungen 5 in dem Gehäuse 6 gelagert. Zumindest nahe einer Lagervorrichtung 5 ist eine Dichtung 23 angeordnet, die vorzugsweise aus Graphit hergestellt ist und die Strömungsleitung 2 gegenüber der Umgebung 24 außerhalb des Gehäuses 6 abdichtet. Die Dichtung 23 wird mittels der Lagervorrichtungen 5 gegen das Gehäuse 5 verpresst und dabei bevorzugt auch etwas verformt bzw. gestaucht um sicherzustellen, dass eine möglichst vollständige Abdichtung erfolgt. Mit etwas axialem Spiel wird die Lagervorrichtung 5 mittels einem Sprengring 21 gesichert, wobei der Sprengring 21 gegen einen Anschlag 22 des Gehäuses 6 gepresst wird. Zusätzlich ist wird die Lagervorrichtung 5 und die Dichtung 23 von einer Buchse 32 geschützt. Diese gewährleistet beispielsweise, dass eine Dichtung 23 aus Graphit bis zu Temperaturen von 1300°C beständig bleibt, da ein Kontakt des Graphits mit Sauerstoff der Luft vermieden wird.

Das Gehäuse 6 hat einen Flansch 11, der mit der Lagervorrichtung 5 über eine Wärmebrücke 12 verbunden ist. Die Wärmebrücke 12 zeichnet sich durch eine besonders gute Wärmeleitfähigkeit aus, so dass die über die Welle in die Lagervorrichtung 5 eingebrachte Wärme des Abgases schnell abgeführt wird und somit die Langlebigkeit der Lagervorrichtung 5 gewährleistet ist. Dies wird insbesondere dadurch verstärkt, dass das angrenzende Bauteil 16 (angedeutet durch gestrichelte Linien) eine im vergleich zum Abgas deutlich geringere Temperatur aufweist. Dabei ist zu gewährleisten, dass die Wärmebrücke 12 bzw. der Flansch 11 Temperaturen aufweisen, die deutlich unterhalb von 350°C, insbesondere unter 250°C und besonders bevorzugt unter 150°C während des gesamten Betriebes liegen.

Das Rotationsventil 34 ist stromaufwärts des angrenzenden Bauteils 16 angeordnet, so dass das Abgas zunächst durch das Gehäuse 6 und anschließend durch das Bauteil 16 hindurchströmt. Dabei weist die Strömungsleitung 2 einen Außendurchmesser 13 auf, der kleiner oder gleich einem angrenzenden Öffnungsdurchmesser 15 des angrenzenden Bauteils 16 ist. Auf diese Weise werden Strömungskanten vermieden, die zur Verwirbelung des durchströmenden Fluids führen würden. Um eine besonders gute Anströmung der Strömungsleitung 2 bei geschlossener Position des Flügels 4 zu bewirken, kann es unter Umständen vorteilhaft sein, in dem Zugang 28 (nicht dargestellt) des Gehäuses 6 Leitstrukturen anzuordnen, die im Bedarfsfall eine Strömungsumlenkung von zentralen Bereichen des Zugangs 28 (nicht dargestellt) hin zu der außenliegenden, ringförmig ausgebildeten Strömungsleitung 2 ermöglichen. Somit könnten der Staudruck im Inneren des Gehäuses bzw. die turbulenten Eigenschaften des durchströmenden Fluids reduziert werden.

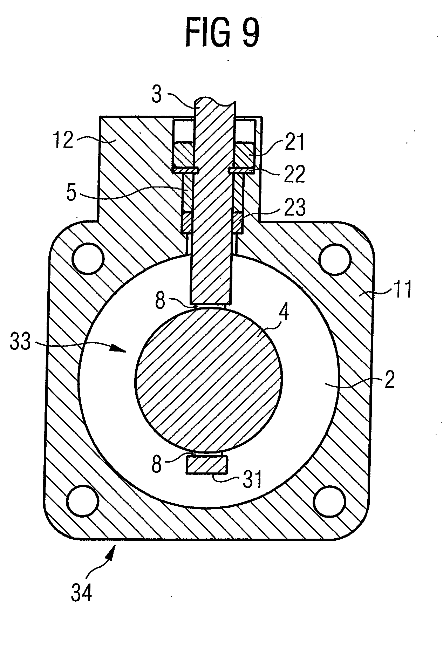

Fig. 9 zeigt schematisch ein weiteres Ausführungsbeispiel des Rotationsventiles 34, wobei die einstückige Ventilklappe 33 nur über eine Lagervorrichtung 5 mit dem Gehäuse 6 verbunden ist. Die Halterung bzw. Befestigung der Welle 3 erfolgt nur noch in einem Bereich des Gehäuses 6, während das andere Ende 31 der Welle 3 frei ist. Die Welle 3 erstreckt sich dabei über den Querschnitt 20 des Innenkanals 1, so dass diese auch zwei Nuten 8 hat, die zur Ausrichtung gegenüber dem Mantelrohr 9 des Innenkanals 1 dienen. Eine solche Ausführung der Ventilklappe 33 hat den Vorteil, dass die Herstellung aufgrund des Weglassens der zweiten Lagervorrichtung (nicht dargestellt) preiswerter wird. Außerdem wird der durch die Welle 3 erzeugte Strömungswiderstand reduziert. Die Welle 3 und die Klappe 4 sind dabei einstückig hergestellt, insbesondere wurden sie aus dem gleichen Material und in einem Verfahrensschritt gesintert.

**Bezugszeichenliste**

| | |
|---|---|
| 1 | Innenkanal |
| 2 | Strömungsleitung |
| 3 | Welle |
| 4 | Flügel |
| 5 | Lagervorrichtung |
| 6 | Gehäuse |
| 7 | Antrieb |
| 8 | Nut |
| 9 | Mantelrohr |
| 10 | Aussparung |
| 11 | Flansch |
| 12 | Wärmebrücke |
| 13 | Außendurchmesser |
| 14 | Strömungsrichtung |
| 15 | Öffnungsdurchmesser |
| 16 | Bauteil |
| 17 | Ringspalt |
| 18 | Breite |
| 19 | Fläche |
| 20 | Querschnitt |
| 21 | Sprengring |
| 22 | Anschlag |
| 23 | Dichtung |
| 24 | Umgebung |
| 25 | Montageebene |
| 26 | Kühlmittelzufuhr |
| 27 | Kühlmittelauslass |
| 28 | Zugang |
| 29 | Achse |
| 30 | Mantel |
| 31 | Ende |
| 32 | Buchse |
| 33 | Ventilklappe |
| 34 | Rotationsventil |
| 35 | Lagerstelle |
| 36 | Bohrung |
| 37 | Äußere Bohrungsöffnung |
| 38 | Innere Bohrungsöffnung |

39    Kante
40    Strömungsquerschnitt

A    Abstand
B    Bohrungsdurchmesser
D    Strömungsleitungsdurchmesser
H    Bohrungshöhe
L    Länge

d    Wellendurchmesser
x    Erste Teilsstrecke
y    Zweite Teilstrecke

α    Winkel

**Patentansprüche**

1.  Ventilklappe (33) zur Regelung einer Durchflussmenge eines Fluids durch einen Strömungsquerschnitt (40) einer Strömungsleitung (2), insbesondere zur Regelung einer Durchflussmenge eines heißen Abgases in einer Abgasleitung, wobei die Ventilklappe (33) eine Welle (3) und einen Flügel (4) hat, so dass die Ventilklappe (33) in dem Strömungsquerschnitt (40) der Strömungsleitung (2) rotierbar anordenbar ist, **dadurch gekennzeichnet, dass** die Ventilklappe (33) einstückig ausgeführt ist.

2.  Ventilklappe (33) nach Anspruch 1, **dadurch gekennzeichnet, dass** die Ventilklappe (33) einstückig gesintert oder geschmiedet ist.

3.  Ventilklappe (33) nach Anspruch 1 oder 2, **dadurch gekennzeichnet, dass** der Flügel (4) eine Achse (29) der Welle (3) direkt kreuzt.

4.  Ventilklappe (33) nach einem der vorherigen Ansprüche, **dadurch gekennzeichnet, dass** der Flügel (4) an einem freien Ende (31) der Welle (3) angeordnet ist.

5.  Ventilklappe (33) nach einem der vorherigen Ansprüche, **dadurch gekennzeichnet, dass** die Welle (3) Mittel zur Positionierung der Welle (3) und/ oder des Flügels (4) in Relation zu dem Strömungsquerschnitt (40) der Strömungsleitung (2) aufweist.

6.  Rotationsventil (34) zur Regelung einer Durchflussmenge eines Fluids durch einen Querschnitt (40) einer Strömungsleitung (2), insbesondere zur Regelung einer Durchflussmenge eines heißen Abgases in einer Abgasleitung, wobei das Rotationsventil (34) ein den Strömungsquerschnitt (40) der Strömungsleitung (2) begrenzendes Gehäuse (6), eine Ventilklappe (33) nach einem der vorhergehenden Ansprüche sowie mindestens eine Lagervorrichtung (5) für eine rotierbare Lagerung der Ventilklappe (33) in dem Gehäuse (6) aufweist.

7.  Rotationsventil (34) nach Anspruch 6, **dadurch gekennzeichnet, dass** das Gehäuse (6) einstückig ausgeführt ist, und die Ventilklappe (33) über die Strömungsleitung (2) in mindestens eine Lagerstelle (35) für die mindestens eine Lagervorrichtung (5) einsetzbar ist.

8.  Rotationsventil (34) nach Anspruch 6 oder 7, **dadurch gekennzeichnet, dass** die mindestens eine Lagerstelle (35) eine sich durch das Gehäuse (6) erstreckende Bohrung (36) ist.

9.  Rotationsventil (34) nach einem der Ansprüche 6 bis 8, **dadurch gekennzeichnet, dass** das Rotationsventil (34) einen Antrieb (7) aufweist, der eine beliebige Rotation der Ventilklappe (33) um die Achse (29) der Welle (3) ermöglicht.

10. Rotationsventil (34) nach einem der Ansprüche 6 bis 9, **dadurch gekennzeichnet, dass** das Rotationsventil (34) in der mindestens einen Lagerstelle (35) eine Dichtung (23) aufweist.

# FIG 1

# FIG 2

FIG 3

FIG 4

# FIG 5

# FIG 6

FIG 7

FIG 8

# FIG 9

EP 1 288 543 A1

## EUROPÄISCHER RECHERCHENBERICHT

**Europäisches Patentamt**

Nummer der Anmeldung

EP 02 01 9144

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 3 024 802 A (STILLWAGON CRAWFORD K) 13. März 1962 (1962-03-13) | 1,3,6 | F16K1/22 F16K27/02 |
| A | * Spalte 4, Zeile 43 - Spalte 4, Zeile 46; Abbildung 1 * | 7-10 | F02D9/10 F01N1/16 |
| X | DE 19 39 566 A (SERCK INDUSTRIES LTD) 18. Februar 1971 (1971-02-18) | 1,6,8 | |
| A | * Seite 2, Absatz 4 - Seite 2, Absatz 1; Abbildung 1 * | 8,10 | |
| X | EP 0 705 967 A (HAHN KARLHEINZ) 10. April 1996 (1996-04-10) * Zusammenfassung; Abbildung 1 * | 1,3 | |
| X | DE 92 08 807 U (JAKIBS KLAUS) 4. März 1993 (1993-03-04) * das ganze Dokument * | 1,3 | |
| X | US 3 661 171 A (SONDERMAN WILLIAM G ET AL) 9. Mai 1972 (1972-05-09) | 1,6 | |
| A | * Spalte 2, Zeile 66 - Spalte 3, Zeile 13 * | 7,8,10 | RECHERCHIERTE SACHGEBIETE (Int.Cl.7) |
| X | US 4 133 513 A (MEYER PAUL L) 9. Januar 1979 (1979-01-09) | 1,6 | F16K F02D F01N |
| A | * Zusammenfassung; Abbildung 4 * | 7-10 | |
| X | US 4 259 980 A (MUELLER FRITZ) 7. April 1981 (1981-04-07) * Zusammenfassung; Abbildung 2 * | 1,3 | |
| A | FR 2 606 115 A (PEUGEOT ;CITROEN SA (FR)) 6. Mai 1988 (1988-05-06) * Zusammenfassung; Abbildung 1 * | 1,3,6,7 | |

Der vorliegende Recherchenbericht wurde für alle Patentansprüche erstellt

| Recherchenort | Abschlußdatum der Recherche | Prüfer |
|---|---|---|
| MÜNCHEN | 31. Oktober 2002 | Tatus, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

17

**ANHANG ZUM EUROPÄISCHEN RECHERCHENBERICHT**
**ÜBER DIE EUROPÄISCHE PATENTANMELDUNG NR.**   EP 02 01 9144

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 3024802 | A | 13-03-1962 | KEINE | | |
| DE 1939566 | A | 18-02-1971 | DE | 1939566 A1 | 18-02-1971 |
| EP 0705967 | A | 10-04-1996 | DE | 9415977 U1 | 01-12-1994 |
| | | | EP | 0705967 A1 | 10-04-1996 |
| DE 9208807 | U | 04-03-1993 | DE | 9208807 U1 | 04-03-1993 |
| US 3661171 | A | 09-05-1972 | CA | 928281 A1 | 12-06-1973 |
| | | | CA | 952891 A2 | 13-08-1974 |
| | | | CH | 515434 A | 15-11-1971 |
| | | | DE | 2027775 A1 | 27-01-1972 |
| | | | ES | 381587 A1 | 01-11-1972 |
| | | | FR | 2092189 A5 | 21-01-1971 |
| | | | GB | 1282955 A | 26-07-1972 |
| | | | JP | 53006373 B | 07-03-1978 |
| | | | NL | 7008720 A ,B, | 16-11-1971 |
| | | | ZA | 7003749 A | 27-01-1971 |
| US 4133513 | A | 09-01-1979 | KEINE | | |
| US 4259980 | A | 07-04-1981 | DE | 2759000 A1 | 05-07-1979 |
| | | | AT | 392338 B | 11-03-1991 |
| | | | AT | 888478 A | 15-08-1985 |
| | | | CH | 633085 A5 | 15-11-1982 |
| | | | FR | 2413594 A1 | 27-07-1979 |
| | | | GB | 2011586 A ,B | 11-07-1979 |
| | | | IT | 1101340 B | 28-09-1985 |
| FR 2606115 | A | 06-05-1988 | FR | 2606115 A1 | 06-05-1988 |

EPO FORM P0461

Für nähere Einzelheiten zu diesem Anhang : siehe Amtsblatt des Europäischen Patentamts, Nr.12/82